# FASCICULE DE BREVET EUROPEEN

(11) **EP 2 366 236 B1**
(45) Date de publication et mention de la délivrance du brevet: **04.01.2017**
(21) Numéro de dépôt: 09797088.3
(22) Date de dépôt: 25.11.2009
(51) Int. Cl.: H04L 12/24, H04L 12/46

(54) **PROCÉDÉ DE CONFIGURATION D'UN CIRCUIT VIRTUEL**
KONFIGURATIONSVERFAHREN FÜR VIRTUELLE SCHALTUNGEN
VIRTUAL CIRCUIT CONFIGURATION METHOD

(30) Priorité: 28.11.2008 FR 0858113
(43) Date de publication de la demande: 21.09.2011
(73) Titulaire: Orange, 75015 Paris (FR)
(72) Inventeur: JOUNAY, Frédéric, F-22560 Pleumeur Bodou (FR); LE ROUX, Jean-Louis, F-22300 Lannion (FR)
(74) Mandataire: Millet, Sandrine
(86) Numéro de dépôt international: PCT/FR2009/052296
(87) Numéro de publication internationale: WO 2010/061133

(56) Documents cités:
- JOUNAY (ED) P NIGER FRANCE TELECOM Y KAMITE NTT COMMUNICATIONS L MARTINI CISCO S DELORD UECOMM R AGGARWAL JUNIPER NETWORKS L WANG: "Requirements for Point-to-Multipoint Pseudowire; draft-jounay-pwe3-p2mp-pw-requirements-02. txt" REQUIREMENTS FOR POINT-TO-MULTIPOINT PSEUDOWIRE; DRAFT-JOUNAY-PWE3-P2MP-PW-REQUIREMENTS-02. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 14 juillet 2008 (2008-07-14), XP015059279
- JOUNAY P NIGER FRANCE TELECOM L MARTINI NTT COMMUNICATIONS Y KAMITE CISCO S DELORD G HERON UECOMM TELLABS L WANG R AGGARWAL TELENO: "Use Cases and signaling requirements for Point-to-Multipoint PW; draft-jounay-pwe3-p2mp-pw-requirements-01. txt" IETF STANDARD-WORKING-DRAFT, INTERNET ENGINEERING TASK FORCE, IETF, CH, no. 1, 20 novembre 2007 (2007-11-20), XP015054139 ISSN: 0000-0004
- ERIC MANNIE (CONSULTING) DIMITRI PAPADIMITRIOU (ALCATEL) LYNDON ONG (CIENA): 'GMPLS LSP Bandwidth Modification (LBM) for SONET/SDH; draft-mannie-ccamp-gmpls-lbm-tdm-04.txt' no. 4, 01 Novembre 2002, XP015032030 ISSN: 0000-0004
- PAN (HAMMERHEAD SYSTEMS) M BOCCI MUSTAPHA AISSAOUI (ALCATEL) FLORIN BALUS HAMID OULD-BRAHIM (NORTEL) P: 'Pseudo Wire Protection; draft-pan-pwe3-protection-03.txt' no. 3, 01 Juillet 2006, XP015047198 ISSN: 0000-0004

## Description

L'invention se situe dans le domaine des télécommunications, et plus particulièrement le domaine des réseaux de commutation de paquets.

Dans un réseau de commutation de paquets ou *Packet Switched Network* en anglais, les données à transmettre se présentent sous forme de paquets traités par des équipements du réseau jusqu'à atteindre leur destination. L'ensemble des paquets à transmettre constitue un flux de données.

Un exemple de technologie utilisée dans les réseaux de commutation de paquets pour acheminer des paquets de données, est la technologie MPLS (*MultiProtocol Label Switching* ou en français : commutation multi-protocole par étiquette). La technologie MPLS propose de rajouter en entête des paquets de données une ou plusieurs étiquettes contenant des informations permettant aux équipements du réseau de déterminer le prochain saut qu'un paquet doit effectuer pour atteindre sa destination.

Dans un tel réseau, les différents équipements du réseau sont connectés entre eux au moyen de chemins MPLS appelés LSP *(Label Switched Path,* ou chemin commuté par étiquette en français).

Un chemin LSP est établit depuis un équipement terminal de tête (ou équipement Ingress), au travers d'équipements intermédiaires et vers un équipement terminal de destination (ou équipement Egress).

La technologie MPLS est décrite plus en détail dans un document de l'IETF (groupe de standardisation de l'Internet, abréviation des termes anglais *Internet Engineering Task Force*), référencé RFC 3031 (RFC signifiant « requête pour commentaires », ou en anglais *Request For Comments*).

Cependant, la technologie MPLS ne permet de traiter que des paquets conformes au protocole IP (*Internet Protocol*, ou protocole internet).

Afin de pallier cet inconvénient, le groupe de standardisation PWE3 (*PseudoWire Emulation Edge to Edge*) de l'IETF définit un concept de circuit virtuel permettant d'émuler un lien point à point bidirectionnel entre deux équipements d'un réseau de commutation de paquets reposant sur la technologie IP/MPLS. De tels circuits virtuels, définis dans le document RFC 3985, permettent la transmission de paquets de données non-conformes au protocole IP, tels que par exemple des paquets de données conformes au protocole ATM.

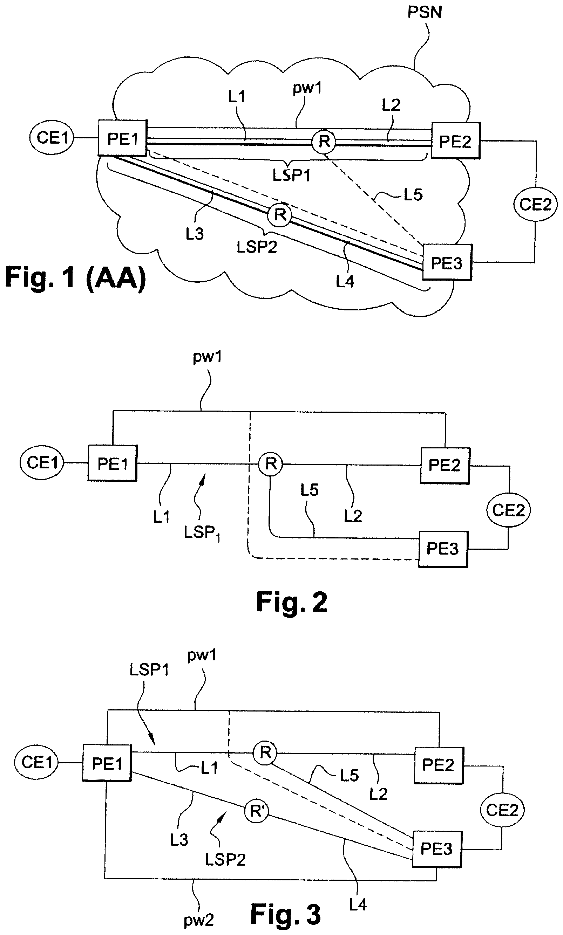

En référence à la figure 1, un circuit virtuel pw1 est établi entre un premier équipement terminal PE1 disposé en bordure d'un réseau de commutation de paquets PSN et un deuxième équipement terminal PE2 également disposé en bordure du réseau PSN. Un tel circuit virtuel pw1 est porté par un chemin LSP sous-jacent, LSP₁. Un tel chemin sous-jacent LSP₁ comprend une première liaison L1 établie entre l'équipement terminal PE1 et un équipement intermédiaire R du réseau PSN. Une deuxième liaison L2 du chemin sous-jacent LSP₁ est, quant à elle, établie entre l'équipement intermédiaire R et le deuxième équipement terminal PE2. Le premier équipement terminal PE1 constitue à la fois une première extrémité du circuit virtuel pw1 et du chemin sous-jacent LSP₁. Le deuxième équipement terminal PE2 constitue à la fois une deuxième extrémité du circuit virtuel pw1 et du chemin sous-jacent LSP₁. Une fois le circuit virtuel pw1 établi, l'équipement terminal PE1 émet un flux de données acheminé via le circuit virtuel pw1 jusqu'à l'équipement terminal PE2.

Afin d'assurer la continuité du service en cas de défaillance de la deuxième liaison du chemin sous-jacent LSP₁, il est connu de mettre en oeuvre la solution de protection objet du document de brevet WO 2008/037917, déposé au nom du demandeur afin d'assurer la continuité du trafic entre un équipement source CE1 connecté au premier équipement terminal PE1 et un équipement récepteur CE2 connecté au deuxième équipement terminal PE2.

Une telle solution consiste à établir une troisième liaison L5 entre l'équipement intermédiaire R et un troisième équipement terminal PE3 auquel l'équipement récepteur CE2 est également connecté. La troisième liaison L5 est établie en même temps que les autres liaisons L1 et L2 constitutives du chemin sous-jacent LSP₁ à l'initiative du premier équipement terminal PE1.

Ainsi, lorsque l'équipement intermédiaire R détecte une défaillance de la deuxième liaison L2 ou du deuxième équipement terminal PE2, il active la troisième liaison L5 et bascule le trafic de données sur cette dernière.

Une telle solution permet ainsi d'assurer la continuité du service au niveau des chemins sous-jacents. Cependant, une telle solution ne permet pas de protéger le circuit virtuel pw1 en cas de défaillance de la deuxième liaison du chemin sous-jacent. En effet, un circuit virtuel étant une liaison point à point établie entre un premier équipement terminal et un deuxième équipement terminal, une défaillance de la deuxième liaison du chemin sous-jacent entraîne une rupture du circuit virtuel.

Pour pallier cet inconvénient, le groupe de travail PWE3 propose une solution consistant à doubler le premier circuit virtuel pw1 par un deuxième circuit virtuel pw2 servant de circuit virtuel de secours de sorte que, lorsque la deuxième liaison du chemin sous-jacent tombe en panne les paquets de données sont acheminés au moyen du circuit virtuel pw2 de secours dont une extrémité est constituée par un équipement terminal de sortie différent.

Ainsi, en référence à la figure 1, un deuxième circuit virtuel pw2 est établi entre l'équipement terminal PE1, constituant une première extrémité du circuit virtuel, et un deuxième équipement terminal PE3 constituant une deuxième extrémité du circuit virtuel. Un tel circuit virtuel pw2 est porté par un chemin LSP sous-jacent, LSP₂. Un tel chemin sous-jacent LSP₂ comprend une première liaison L3 établie entre l'équipement terminal PE1 et un deuxième équipement intermédiaire R' du réseau PSN. Une deuxième liaison L4 du chemin sous-jacent LSP₂ est, quant à elle, établie entre l'équipement intermédiaire R' et le troisième équipement terminal PE3.

Afin d'assurer la continuité du service, l'équipement terminal d'entrée PE1 comporte des moyens mettant en oeuvre une fonction de détection d'une panne de la deuxième liaison du chemin sous-jacent LSP₁ ou de l'équipement terminal PE2 et une fonction de basculement du flux des données du premier circuit virtuel pw1 vers le deuxième circuit virtuel pw2.

Lorsqu'une défaillance intervient au niveau de la deuxième liaison du chemin sous-jacent LSP₁, celle-ci est détectée au niveau de l'équipement terminal d'entrée PE1, par exemple à partir d'un message indiquant l'apparition d'une défaillance émis à travers le réseau PSN. Une fois informé de la défaillance, l'équipement terminal d'entrée PE1 déclenche le basculement du flux de données du premier circuit virtuel pw1 vers le deuxième circuit virtuel pw2 assurant ainsi l'acheminement des données vers l'équipement terminal de sortie PE3.

Cependant, une telle solution a pour conséquence un allongement du temps de restauration en cas de défaillance d'un équipement terminal de sortie ou d'une liaison constitutive d'un chemin sous-jacent ce qui a un impact négatif sur la qualité de service.

Le document de l'IETF « Requirements for Point-to-Multipoint Pseudowire ; draft-jounay-pwe3-p2mp-pw-requirements-02.txt » de Jounay, Niger (France Telecom), Kamite (NTT Communications), Delord (Uecomm) Wang (Telenor) Heron (BT), Martini (cisco), Aggarwal (Juniper Networks), Bocci, Vigoureux (Alcatel-Lucent) Jin (Nokia Siemens), et publié le 14 juillet 2008, décrit un modèle de référence pour et la signalisation pour l'établissement de circuits virtuels point à multipoints. Ce document n'apporte pas de solution en cas de défaillance d'un équipement terminal.

La solution proposée dans le cadre de l'invention ne présente pas ces inconvénients de l'art antérieur.

En effet, la solution objet de l'invention repose sur la mise en oeuvre d'un procédé de configuration d'un pseudo lien mono-segment, appelé circuit virtuel, établi entre un premier et un deuxième équipement terminal au travers duquel un flux de données est destiné à être transmis, le circuit virtuel étant porté par un chemin sous-jacent comprenant une première liaison établie entre le premier équipement terminal et un équipement intermédiaire, et une deuxième liaison établie entre l'équipement intermédiaire et le deuxième équipement terminal.

Une troisième liaison du chemin sous-jacent étant établie entre l'équipement intermédiaire et un troisième équipement terminal, le circuit virtuel étant établi par un message d'établissement comprenant un paramètre d'identification du circuit virtuel ainsi que du chemin sous-jacent portant le circuit virtuel et une étiquette déterminée par le premier équipement ajoutée par ledit premier équipement terminal à chaque paquet destiné à être émis vers ledit deuxième équipement terminal.

Plus particulièrement, le procédé objet de l'invention comprend :
- une étape de réception d'un message de configuration comprenant au moins un paramètre d'identification du circuit virtuel par un troisième équipement terminal connecté par une troisième liaison du chemin sous-jacent à l'équipement intermédiaire, un paramètre d'identification du chemin sous-jacent portant le circuit virtuel et l'étiquette déterminée par ledit premier équipement terminal,
- une étape de configuration d'une table de commutation au moyen desdits paramètres,
- une étape de traitement du flux de données des paquets destinés à être émis vers ledit deuxième équipement terminal à l'aide de la table configurée, lorsque le circuit virtuel est basculé par ledit équipement intermédiaire (R) de la deuxième à la troisième liaison suite à la détection par ledit équipement intermédiaire (R) d'une défaillance sur la deuxième liaison.

La solution objet de l'invention propose d'utiliser un autre équipement terminal appartenant à une liaison d'un chemin sous-jacent pour constituer l'extrémité d'un circuit virtuel porté par ce chemin sous-jacent. En configurant le troisième équipement terminal pour qu'il puisse traiter en réception le flux de données transmis au travers du circuit virtuel, il devient possible pour le circuit virtuel considéré d'être porté non plus par la première et la deuxième liaison du chemin sous-jacent mais par la première et la troisième liaison de ce dernier. Le troisième équipement terminal devient ainsi une extrémité du premier circuit virtuel en lieu et place du deuxième équipement terminal. Ceci permet par exemple de protéger le circuit virtuel lorsque le deuxième équipement terminal n'est plus accessible suite à la défaillance de la deuxième liaison du chemin sous-jacent ou du deuxième équipement terminal ou lorsque le deuxième équipement terminal est utilisé à la limite de ses capacités de le décharger sur un autre équipement terminal.

Une telle solution n'a jamais été envisagée dans l'art antérieur. L'homme du métier a en effet toujours considéré un circuit virtuel comme une liaison point à point établie entre un premier équipement terminal et un deuxième équipement terminal, de sorte qu'à chaque couple premier équipement terminal/deuxième équipement terminal, est associé un circuit virtuel.

Allant à l'encontre de ces préjugés de l'homme du métier, les inventeurs de la présente demande proposent, au contraire, de modifier ce couple sans pour autant créer un nouveau circuit virtuel.

Une telle réalisation permet notamment d'améliorer le temps de restauration en cas de défaillance de la deuxième liaison du chemin sous-jacent puisque le basculement du circuit virtuel intervient au plus près de la défaillance. En améliorant le temps de restauration, on réduit également la quantité de données perdues suite à la défaillance.

Une telle solution permet une amélioration de la réactivité réseau car la détection intervient au plus près de la défaillance. Ainsi, la défaillance de la deuxième liaison du chemin sous-jacent est détectée plus rapidement, l'information n'ayant pas à traverser le réseau jusqu'au premier équipement terminal avant d'être traitée. La fonction de basculement du circuit virtuel étant embarquée dans l'équipement intermédiaire, le basculement du circuit virtuel vers la troisième liaison intervient plus rapidement puisque le basculement est déclenché à détection de la défaillance par l'équipement intermédiaire.

Les données diffusées dans les circuits virtuels peuvent être des données utiles, comme par exemple un flux ATM transportant un service ou encore des données de services, telles que par exemple un message de détection de défaillance d'un équipement du réseau. Ainsi dans le cas d'échanges de données de services, la solution proposée dans la présente demande permet d'améliorer la réactivité des équipements présents dans le réseau.

Selon une caractéristique du procédé de configuration objet de l'invention, celui-ci comporte une étape de réception par le troisième équipement terminal d'une demande de configuration du circuit virtuel comprenant au moins un paramètre d'identification du circuit virtuel, dans lequel le troisième équipement terminal est configuré au moyen du paramètre d'identification du circuit virtuel.

Le circuit virtuel n'étant pas établi entre le premier et le troisième équipement terminal, il est nécessaire de fournir à ce dernier des paramètres d'identification du circuit virtuel nécessaires à sa configuration.

Les paramètres identifiant le circuit virtuel sont par exemple, un identifiant du chemin sous-jacent par lequel il est porté, l'étiquette à utiliser lors de la diffusion des données au travers du circuit virtuel, etc.

Avantageusement, de tels paramètres peuvent être déterminés par le premier équipement terminal. En effet, le premier équipement terminal constituant une extrémité du circuit virtuel, il connait les paramètres identifiant le circuit virtuel.

Selon une caractéristique du procédé de configuration objet de l'invention, la demande de protection comprend également une demande d'établissement d'un autre circuit virtuel, dit circuit virtuel de secours, entre le premier et le troisième équipement terminal, le circuit virtuel de secours étant destiné à transmettre le flux de données.

En prévoyant d'établir un circuit virtuel de secours entre le premier et le troisième équipement terminal, il est possible de proposer une solution de protection du circuit virtuel plus solide. En effet, en cas de défaillance de la deuxième liaison du chemin sous-jacent, il devient possible dans un premier temps de basculer le circuit virtuel sur la troisième liaison du chemin sous-jacent, assurant ainsi un temps de restauration relativement faible puis, dans un deuxième temps il est possible de basculer le flux de données initialement transmis au travers du circuit virtuel vers le circuit virtuel de secours.

L'invention concerne encore un équipement terminal destiné à former une extrémité d'un circuit virtuel établi entre un premier et un deuxième équipement terminal, le circuit virtuel étant porté par un chemin sous-jacent comprenant une première liaison établie entre le premier équipement terminal et un équipement intermédiaire, et une deuxième liaison établie entre l'équipement intermédiaire et le deuxième équipement terminal.

Un tel équipement terminal est destiné à être connecté par une troisième liaison du chemin sous-jacent à l'équipement intermédiaire, le circuit virtuel étant établi par un message d'établissement comprenant un paramètre d'identification du circuit virtuel ainsi que du chemin sous-jacent portant le circuit virtuel et une étiquette déterminée par le premier équipement et ajoutée par ledit premier équipement terminal à chaque paquet destiné à être émis vers ledit deuxième équipement terminal, et comprend :
- des moyens de réception d'un message de configuration comprenant au moins un paramètre d'identification du circuit virtuel, un paramètre d'identification du chemin sous-jacent portant le circuit virtuel et l'étiquette déterminée par ledit premier équipement terminal,
- des moyens de traitement des paquets destinés à être émis vers ledit deuxième équipement terminal à l'aide de la table configurée, lorsque le circuit virtuel est basculé par ledit équipement intermédiaire (R) de la deuxième à la troisième liaison suite à la détection par ledit équipement intermédiaire (R) d'une défaillance sur la deuxième liaison.

L'invention concerne également un programme d'ordinateur, comprenant des instructions de code de programme pour la mise en oeuvre des étapes du procédé de configuration selon l'invention lorsque le programme est exécuté par un processeur.

D'autres caractéristiques et avantages apparaîtront à la lecture de modes de réalisation décrits en référence aux dessins dans lesquels :
- la figure 1 représente une solution mise en oeuvre dans l'état de l'art afin d'assurer la continuité du service dans un réseau de commutation de paquets,
- la figure 2 représente une première solution permettant d'assurer la continuité du service en cas de défaillance d'un chemin sous-jacent portant un circuit virtuel selon l'invention,
- la figure 3 représente une deuxième solution permettant d'assurer la continuité du service en cas de défaillance d'un chemin sous-jacent portant un circuit virtuel selon l'invention,
- la figure 4 représente un diagramme temporel d'échanges de messages entre un premier équipement terminal et un équipement intermédiaire appartenant à un réseau de commutation de paquets d'une part et l'équipement intermédiaire et un deuxième et un troisième équipement terminal d'autre part, afin d'établir un chemin sous-jacent et un circuit virtuel conformément au procédé de configuration objet de l'invention,
- la figure 5 représente un diagramme temporel d'échanges de messages entre un premier équipement terminal et un équipement intermédiaire appartenant à un réseau de commutation de paquets d'une part et l'équipement d'entrée et un deuxième et un troisième équipement terminal d'autre part, lors de la diffusion de données au travers du circuit virtuel selon un premier mode de réalisation de l'invention,
- la figure 6 représente un diagramme temporel d'échanges de messages entre un premier équipement terminal, un premier et un deuxième équipement intermédiaire appartenant à un réseau de commutation de paquets d'une part et les équipements intermédiaires et un deuxième et un troisième équipement terminal d'autre part, afin d'établir un chemin sous-jacent et deux circuits virtuels conformément à un deuxième mode de réalisation de l'invention,
- la figure 7 représente un diagramme temporel d'échanges de messages entre un premier équipement terminal et un premier et un deuxième équipement intermédiaire appartenant à un réseau de commutation de paquets d'une part et l'équipement d'entrée et un deuxième et un troisième équipement terminal d'autre part, lors de la diffusion de données au travers du circuit virtuel selon un deuxième mode de réalisation de l'invention,
- les figures 8A, 8B et 8C représentent des messages échangés lors de la mise en oeuvre de l'invention,
- la figure 9 représente un équipement terminal mettant en oeuvre le procédé de configuration objet de l'invention.

La figure 2 représente une connexion établie entre un premier équipement terminal PE1 et deux équipements terminaux PE2 et PE3, chacun de ces trois équipements terminaux étant disposé en bordure d'un réseau de commutation de paquets PSN. Ces trois équipements terminaux sont connectés entre eux par des chemins sous-jacents LSPᵢ établis conformément au protocole RSVP (*Resource Reservation Protocol*, ou en français protocole de réservation de ressources). Un chemin sous-jacent LSP₁ est établi entre le premier équipement terminal PE1 et le deuxième équipement terminal PE2. Un tel chemin sous-jacent comporte une première liaison L1 établie entre le premier équipement terminal PE1 et un équipement intermédiaire R et une deuxième liaison L2 établie entre l'équipement intermédiaire R et le deuxième équipement terminal PE2.

Un circuit virtuel pw1 mono-segment établissant une connexion entre le premier équipement terminal PE1 et le deuxième équipement terminal PE2 est porté par le chemin sous-jacent LSP₁. Le circuit virtuel pw1 ainsi établi permet de diffuser des flux de données découpées en paquets de données entre un premier équipement réseau CE1, dit équipement source, connecté au premier équipement terminal PE1 et un deuxième équipement réseau CE2, dit équipement récepteur, connecté au deuxième équipement terminal PE2.

En cas de défaillance de la liaison L2 constitutive du chemin sous-jacent LSP₁ il est connu de mettre en oeuvre la solution de protection objet du document de brevet WO 2008/037917, déposé au nom du demandeur afin d'assurer la continuité du trafic entre l'équipement source CE1 et l'équipement récepteur CE2 au niveau des chemins sous-jacents. Dans la suite du texte, on entend par défaillance de la deuxième liaison L2 aussi bien une défaillance de la liaison L2 elle-même qu'une défaillance du deuxième équipement terminal PE2.

Une telle solution consiste à établir une troisième liaison L5 du chemin sous-jacent LSP₁ entre l'équipement intermédiaire R et le troisième équipement terminal PE3 auquel l'équipement récepteur CE2 est également connecté. La troisième liaison L5 est établie en même temps que les autres liaisons L1 et L2 constitutives du chemin sous-jacent LSP₁ à l'initiative du premier équipement terminal PE1.

Ainsi, lorsque l'équipement intermédiaire R détecte une défaillance de la deuxième liaison L2, il active la troisième liaison L5 et bascule le flux de données sur cette dernière. Le circuit virtuel pw1 étant porté par le chemin sous-jacent LSP1, lorsque le flux de données est basculé sur la troisième liaison L5, le circuit virtuel pw1 est lui aussi basculé sur la liaison L5 et a pour extrémité non plus le deuxième équipement terminal PE2 mais le troisième équipement terminal PE3.

La figure 3 représente un deuxième mode de réalisation de l'invention. Les éléments communs décrits en référence à la figure 2 portent les mêmes références et ne seront pas décrits à nouveau.

Dans ce deuxième mode de réalisation, une connexion est établie entre le premier équipement terminal PE1 et les deux équipements terminaux PE2 et PE3. Ces trois équipements terminaux sont connectés entre eux par des chemins sous-jacents LSP₁. Le chemin sous-jacent LSP₁ est établi entre le premier équipement terminal PE1 et le deuxième équipement terminal PE2. Un chemin sous-jacent LSP₂ est établi entre le premier équipement terminal PE1 et le troisième équipement terminal PE3. Un tel chemin sous-jacent comporte une première liaison L3 établie entre le premier équipement terminal PE1 et un équipement intermédiaire R' et une deuxième liaison L4 établie entre l'équipement intermédiaire R' et le troisième équipement terminal PE3.

Un circuit virtuel pw2 mono-segment établissant une connexion entre le premier équipement terminal PE1 et le troisième équipement terminal PE3 est porté par le chemin sous-jacent LSP₂. Le circuit virtuel pw2 ainsi établi sert de circuit virtuel de secours en cas de défaillance du chemin sous-jacent PLS₁ portant le circuit virtuel pw1.

Dans ce deuxième mode de réalisation, en cas de défaillance de la liaison L2 constitutive du chemin sous-jacent LSP₁, le flux de données bascule dans un premier temps sur la liaison L5 du chemin sous-jacent LSP₁. Puis dans un deuxième temps, le flux de données est basculé sur le circuit virtuel pw2 de secours.

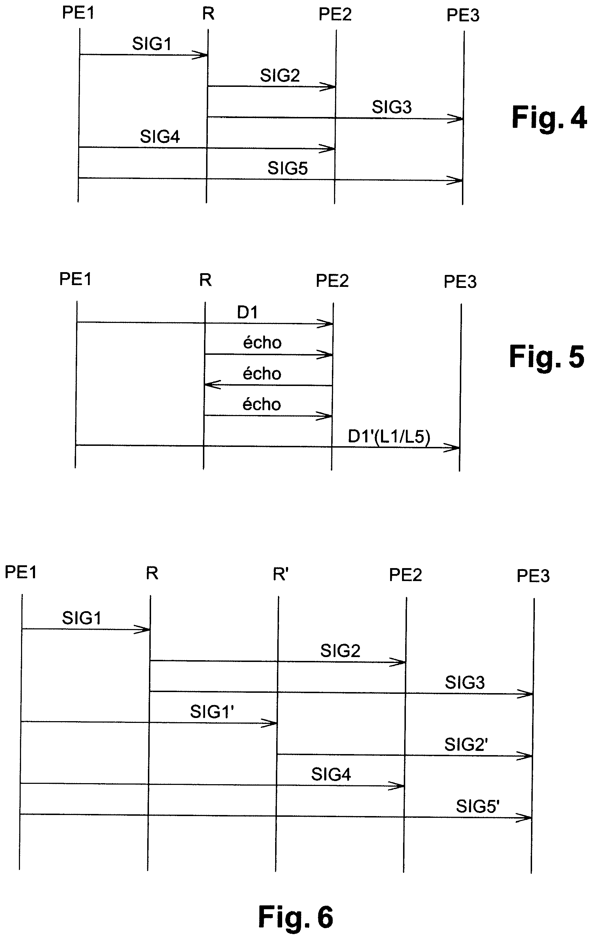

La figure 4 représente un diagramme temporel d'échange de messages entre l'équipement terminal PE1, l'équipement intermédiaire R et les équipements terminaux PE2 et PE3 conformément au premier mode de réalisation de l'invention.

Conformément à un mode de réalisation de l'invention, l'établissement du chemin sous-jacent LSP₁ et du circuit virtuel pw1 est à l'initiative du premier équipement terminal PE1 et repose sur l'échange de messages d'établissement conformes au protocole T-LDP pour le circuit virtuel (*Label Distribution Protocol*, ou protocole de distribution d'étiquette en français) et au protocole RSVP-TE pour le LSP. Ainsi, un premier message d'établissement SIG1 d'une première liaison L1 du chemin sous-jacent LSP₁ est émis par le premier équipement terminal PE1 à destination de l'équipement intermédiaire R. Ce premier message d'établissement comporte un identifiant du deuxième équipement terminal PE2, un identifiant du troisième équipement terminal PE3, ainsi qu'un champ comportant une demande d'établissement d'une liaison L5 de secours entre l'équipement intermédiaire R et le troisième équipement terminal PE3 identifié dans le message SIG1.

A réception du premier message d'établissement SIG1, l'équipement intermédiaire R complète une table de commutation TC à partir des informations contenues dans le message SIG1. Une fois la table de commutation TC complétée, l'équipement intermédiaire R émet deux messages d'établissement SIG2 et SIG3. Le message d'établissement SIG2 de la liaison L3 est émis à destination du deuxième équipement terminal PE2, et le message d'établissement SIG3 de la liaison L5 est émis à destination du troisième équipement terminal PE3. De tels messages sont conformes aux messages d'établissement classiquement émis pour établir une liaison d'un chemin sous-jacent entre deux équipements appartenant à un réseau de commutation de paquets.

Une fois toutes les liaisons du chemin sous-jacent LSP₁ établies, le premier équipement terminal PE1 émet un message d'établissement SIG4 d'un circuit virtuel à destination du deuxième équipement terminal PE2.

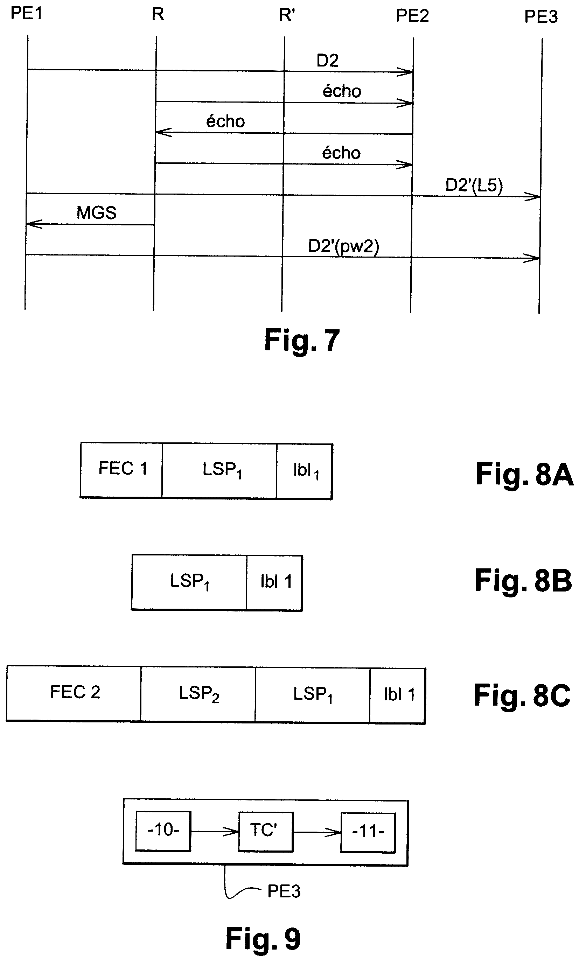

Un tel message d'établissement SIG4 d'un circuit virtuel pw1 comporte un identifiant FEC1 du circuit virtuel pw1 ainsi qu'un champ comportant un identifiant du chemin sous-jacent LSP₁ portant le circuit virtuel pw1. Un tel message d'établissement SIG4 est représenté à la figure 8A.

Dans un mode particulier de réalisation de l'invention, l'identifiant FEC1 du circuit virtuel pw1 comporte un identifiant SAII1 du premier équipement terminal PE1, et un identifiant TAII2 du deuxième équipement terminal PE2.

L'identifiant FEC1 du circuit virtuel constitue une FEC (*Forwarding Equivalent Class*, ou en français classe équivalente de transfert) identifiant le circuit virtuel.

Le message d'établissement SIG4 se distingue d'un message classique d'établissement d'un circuit virtuel car il comporte des données supplémentaires telles que l'identifiant du chemin sous-jacent portant le circuit virtuel.

Le message d'établissement SIG4 comporte également une étiquette lbl1 ajoutée par le premier équipement terminal PE1 à chaque paquet de données destiné à être émis vers le deuxième équipement terminal PE2.

Le premier équipement terminal PE1 émet enfin un message de configuration SIG5 à destination du troisième équipement terminal PE3.

Un tel message de configuration SIG5 comporte un identifiant du circuit virtuel, ainsi qu'un champ comportant un identifiant du chemin sous-jacent LSP₁ portant le circuit virtuel pw1, ainsi que l'étiquette lbl1. Un tel message est représenté à la figure 8B. Fort de ces informations, le troisième équipement terminal PE3 complète une table de commutation TC'. Une fois la table de commutation TC' complétée, l'équipement terminal PE3 est apte à traiter des paquets de données transmis au travers du circuit virtuel pw1 lorsque celui-ci est basculé sur le troisième équipement terminal PE3.

Lors de l'établissement d'un circuit virtuel, l'étiquette ajoutée par le premier équipement terminal PE1 à chaque paquet de données destiné à être émis vers le deuxième équipement terminal PE2 est généralement déterminée par l'équipement terminal PE2. Selon un aspect de l'invention, l'étiquette Ibl1 est déterminée par le premier équipement terminal PE1 contrairement à la pratique courante afin de pouvoir transmettre la même valeur de cette étiquette au troisième équipement terminal PE3 afin que celui-ci puisse configurer sa table de commutation.

Une fois le circuit virtuel pw1 établi, des flux de données sont diffusés entre le premier équipement terminal PE1 et le deuxième équipement terminal PE2.

La figure 5 représente un diagramme temporel d'échange de messages entre le premier équipement terminal PE1, l'équipement intermédiaire R, le deuxième équipement terminal PE2 et le troisième équipement terminal PE3 lors de la diffusion de flux de données, dans une première variante de réalisation de l'invention.

Un flux de données D1 est émis par le premier équipement terminal PE1 à destination du deuxième équipement terminal PE2. Ce flux de données est diffusé au travers du circuit virtuel pw1.

Afin d'assurer la continuité du service, l'équipement intermédiaire R comporte une fonction de détection d'une défaillance de la liaison L2 du chemin sous-jacent LSP₁ ou du deuxième équipement terminal PE2. Afin de détecter une telle défaillance, l'équipement intermédiaire R échange régulièrement des messages « écho » avec le deuxième équipement terminal PE2.

Lorsque l'équipement intermédiaire R ne reçoit pas de réponse à un message « écho », il en déduit que le deuxième équipement terminal PE2 ou la liaison L2 est défaillant.

L'équipement intermédiaire R bascule alors le trafic sur la liaison L5 afin d'assurer la continuité du service. Le circuit virtuel pw1 est alors porté par les liaisons L1 et L5 du chemin sous-jacent LSP₁.

Un flux de données D1' émis, au travers du circuit virtuel pw1, par le premier équipement terminal PE1 est alors reçu par le troisième équipement terminal PE3.

La figure 6 représente un diagramme temporel d'échange de messages entre l'équipement terminal PE1, un premier équipement intermédiaire R, un deuxième équipement intermédiaire R' et les équipements terminaux PE2 et PE3 conformément au deuxième mode de réalisation de l'invention.

Conformément à l'invention, l'établissement des chemins sous-jacent LSP₁, LSP₂ et des circuits virtuels pw1 et pw2 est à l'initiative du premier équipement terminal PE1 et repose sur l'échange de messages d'établissement entre les différents équipements impliqués.

Ainsi, un premier message d'établissement SIG1 d'une première liaison L1 d'un chemin sous-jacent est émis par le premier équipement terminal PE1 à destination de l'équipement intermédiaire R. Ce premier message d'établissement comporte un identifiant du deuxième équipement terminal PE2, un identifiant du troisième équipement terminal PE3, ainsi qu'un champ comportant une demande d'établissement d'un chemin sous-jacent de secours entre l'équipement intermédiaire R et le troisième équipement terminal identifié dans le message SIG1.

A réception du premier message d'établissement SIG1, l'équipement intermédiaire R complète une table de commutation TC à partir des informations contenues dans le message SIG1. Une fois la table de commutation TC complétée, l'équipement intermédiaire R émet deux messages d'établissement SIG2 et SIG3. Le message d'établissement SIG2 de la liaison L2 du chemin sous-jacent LSP₁ est émis à destination du deuxième équipement terminal PE2, et le message d'établissement SIG3 de la liaison L5 du chemin sous-jacent LSP₁ est émis à destination du troisième équipement terminal PE3.

Une fois toutes les liaisons du chemin sous-jacent LSP₁ établies, le premier équipement terminal PE1 émet un deuxième message d'établissement SIG1' d'une première liaison L3 du chemin sous-jacent LSP₂ à destination de l'équipement intermédiaire R'.

A réception du message d'établissement SIG1', l'équipement intermédiaire R' complète une table de commutation TC" à partir des informations contenues dans le message SIG1'. Une fois la table de commutation TC" complétée, l'équipement intermédiaire R' émet un message d'établissement SIG2' de la liaison L4 à destination du troisième équipement terminal PE3 établissant ainsi le deuxième chemin sous-jacent LSP₂.

Dans un mode de réalisation particulier de l'invention, les chemins sous-jacents LSP₁ et LSP₂ peuvent être établis simultanément.

Une fois les chemins sous-jacent LSPᵢ établis, le premier équipement terminal PE1 émet un message d'établissement SIG4 d'un circuit virtuel pw1 à destination du deuxième équipement terminal PE2.

Un tel message d'établissement SIG4 est identique au message SIG4 décrit en référence aux figures 4 et 8A.

Le message d'établissement SIG4 comporte également une étiquette Ibl1 utilisée par le premier équipement terminal PE1 de la diffusion de flux de données à destination du deuxième équipement terminal PE2 au travers du circuit virtuel pw1. Cette étiquette est déterminée et ajoutée par le premier équipement terminal PE1 à chaque paquet de données destiné à être émis vers le deuxième équipement terminal PE2.

Le premier équipement terminal PE1 émet enfin un message SIG5' d'établissement d'un circuit virtuel pw2, dit circuit virtuel de secours à destination du troisième équipement terminal PE3.

Un tel message SIG5' comporte un identifiant FEC2 du circuit virtuel pw2 de secours, un premier champ comportant un identifiant du chemin sous-jacent LSP₂ portant le circuit virtuel pw2 de secours ainsi qu'un deuxième champ comportant un identifiant du chemin sous-jacent LSP₁ portant le circuit virtuel pw1. Un tel message d'établissement SIG5' est représenté à la figure 8C.

Le message d'établissement SIG5' se distingue d'un message classique d'établissement d'un circuit virtuel car il comporte des données supplémentaires telles que l'identifiant du chemin sous-jacent portant le circuit virtuel pw1 et l'identifiant du chemin sous-jacent portant le circuit virtuel pw2 de secours.

Le message SIG5' comporte également l'étiquette Ibl1 déterminée par le premier équipement terminal PE1. Fort de ces informations, le troisième équipement terminal PE3 complète une table de commutation TC'. Une fois la table de commutation TC' complétée, l'équipement terminal PE3 est apte à traiter aussi bien des paquets de données transmis au travers du circuit virtuel pw1 lorsque celui-ci est basculé sur le troisième équipement terminal PE3 que des paquets de données transmis au travers du circuit virtuel pw2 de secours. En effet, les différents paquets de données reçus par le troisième équipement terminal PE3 comprenant tous la même étiquette Ibl1 quelque soit le circuit virtuel au travers duquel ils ont été transmis le troisième équipement terminal PE3 ne distingue pas les paquets de données transmis au travers du circuit virtuel pw1 de ceux transmis au travers du circuit virtuel pw2 de secours. Le troisième équipement terminal considère dans les deux cas qu'il s'agit de paquets de données transmis au travers du circuit virtuel pw2.

La figure 7 représente un diagramme temporel d'échange de messages entre le premier équipement terminal PE1, le premier équipement intermédiaire R, le deuxième équipement intermédiaire R', le deuxième équipement terminal PE2 et le troisième équipement terminal PE3 lors de la diffusion de flux de données, dans la deuxième variante de réalisation de l'invention.

Un flux de données D2 est émis par le premier équipement terminal PE1 à destination du deuxième équipement terminal PE2. Ce flux de données est diffusé au travers du circuit virtuel pw1.

Afin d'assurer la continuité du service, l'équipement intermédiaire R comporte une fonction de détection d'une défaillance de la liaison L2 du chemin sous-jacent LSP₁ ou du deuxième équipement terminal PE2. Afin de détecter une telle défaillance, l'équipement intermédiaire R échange régulièrement des messages « écho » avec le deuxième équipement terminal PE2.

Lorsque l'équipement intermédiaire R ne reçoit pas de réponse à un message « écho », il en déduit que le deuxième équipement terminal PE2 ou la liaison L2 est défaillant.

L'équipement intermédiaire R bascule alors le trafic sur la liaison L5 afin d'assurer la continuité du service. Le circuit virtuel pw1 est alors porté par les liaisons L1 et L5 du chemin sous-jacent LSP₁.

Un flux de données D2' émis, au travers du circuit virtuel pw1, par le premier équipement terminal PE1 est alors reçu par le troisième équipement terminal PE3.

L'équipement intermédiaire R émet ensuite un message MGS de basculement à destination du premier équipement terminal PE1. A réception de ce message MGS, le premier équipement terminal bascule le flux de données D2' depuis le circuit virtuel pw1 vers le circuit virtuel pw2 de secours. Le circuit virtuel pw1 n'est alors plus utilisé.

Dans un autre mode de réalisation de l'invention, le premier équipement terminal PE1 comporte également une fonction de détection d'une défaillance de la liaison L2 du chemin sous-jacent LSP₁ ou du deuxième équipement terminal PE2.

Lorsque le premier équipement terminal PE1 détecte la défaillance, il bascule le flux de données sur le circuit virtuel de secours pw2.

La défaillance de la liaison L2 est détectée en deux temps. Dans un premier temps, la défaillance est détectée au niveau du chemin sous-jacent par l'équipement intermédiaire R et dans un deuxième temps la défaillance est détectée au niveau du circuit virtuel par le premier équipement terminal PE1.

Un équipement terminal PE3 est représenté à la figure 9. Un tel équipement terminal PE3 comporte des moyens de réception 10 de messages de configuration SIG5, de messages SIG5' d'établissement d'un circuit virtuel et de messages d'établissement de liaisons de chemins sous-jacents SIG3 et SIG2' et de paquets de données transmis au travers des circuits virtuels pw1 et pw2.

De tels moyens de réception 10 sont connectés à une table de commutation TC' complétée à l'aide des informations comprises dans les différents messages reçus par l'équipement terminal PE3.

L'équipement terminal PE3 comprend enfin des moyens de traitement 11 des paquets de données reçus. Des tels moyens de traitement sont par exemple des moyens d'émission des paquets de données à destination de l'équipement récepteur CE2.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé de configuration selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé de configuration d'un pseudo lien mono-segment, appelé circuit virtuel, établi entre un premier (PE1) et un deuxième (PE2) équipement terminal au travers duquel un flux de données est destiné à être transmis, le circuit virtuel étant porté par un chemin sous-jacent comprenant une première liaison établie entre le premier équipement terminal et un équipement intermédiaire (R), et une deuxième liaison établie entre l'équipement intermédiaire et le deuxième équipement terminal, et une troisième liaison établie entre l'équipement intermédiaire et un troisième équipement terminal (PE3), le circuit virtuel étant établi par un message d'établissement (SIG4) comprenant un paramètre d'identification du circuit virtuel (FEC1) ainsi que du chemin sous-jacent portant le circuit virtuel et une étiquette (lbl1) déterminée par le premier équipement et ajoutée par ledit premier équipement terminal (PE1) à chaque paquet destiné à être émis vers ledit deuxième équipement terminal (PE2), le procédé étant **caractérisé en ce qu'**il comprend les étapes suivantes mises en oeuvre dans le troisième équipement terminal (PE3):
- une étape de réception d'un message de configuration (SIG5), ledit message comprenant au moins les paramètres suivants :
- un paramètre d'identification du circuit virtuel,
- un paramètre d'identification du chemin sous-jacent portant le circuit virtuel,
- une l'étiquette (lbl1) déterminée par ledit premier équipement terminal (PE1),
- une étape de configuration d'une table de commutation au moyen desdits paramètres,
- une étape de traitement du flux de données des paquets destinés à être émis vers ledit deuxième équipement terminal à l'aide de la table configurée, lorsque le circuit virtuel est basculé par ledit équipement intermédiaire (R) de la deuxième à la troisième liaison suite à la détection par ledit équipement intermédiaire (R) d'une défaillance sur la deuxième liaison.

2. Procédé de configuration selon la revendication 1, dans lequel le message de configuration comprend également une demande d'établissement d'un autre circuit virtuel, dit circuit virtuel de secours, entre le premier et le troisième équipement terminal, le circuit virtuel de secours étant destiné à transmettre le flux de données initialement transmis au travers du circuit virtuel.

3. Equipement terminal (PE3) destiné à former une extrémité d'un pseudo lien mono-segment, appelé circuit virtuel, établi entre un premier (PE1) et un deuxième (PE2) équipement terminal au travers duquel un flux de données est destiné à être transmis, le circuit virtuel étant porté par un chemin sous-jacent comprenant une première liaison établie entre le premier équipement terminal et un équipement intermédiaire (R), une deuxième liaison établie entre l'équipement intermédiaire et le deuxième équipement terminal, et une troisième liaison établie entre l'équipement intermédiaire (R) et l'équipement terminal (PE3), le circuit virtuel étant établi par un message d'établissement (SIG4) comprenant un paramètre d'identification du circuit virtuel (FEC1) ainsi que du chemin sous-jacent portant le circuit virtuel et une étiquette (lbl1) déterminée par le premier équipement et destinée à identifier le flux de données ajoutée par ledit premier équipement terminal (PE1) à chaque paquet destiné à être émis vers ledit deuxième équipement terminal (PE2), l'équipement terminal (PE3) étant **caractérisé en ce qu'**il comprend :
- des moyens de réception d'un message de configuration (SIG5) comprenant au moins les paramètres suivants :
- un paramètre d'identification du circuit virtuel,
- un paramètre d'identification du chemin sous-jacent portant le circuit virtuel,
- l'étiquette (lbl1) déterminée par ledit premier équipement terminal (PE1);
- des moyens de configuration d'une table de commutation au moyen desdits paramètres,
- des moyens de traitement du flux de données des paquets destinés à être émis vers ledit deuxième équipement terminal à l'aide de la table configurée, lorsque le circuit virtuel est basculé par ledit équipement intermédiaire (R) de la deuxième à la troisième liaison suite à la détection par ledit équipement intermédiaire (R) d'une défaillance sur la deuxième liaison.

4. Programme d'ordinateur, **caractérisé en ce qu'**il comprend des instructions de code de programme pour la mise en oeuvre des étapes du procédé de configuration selon la revendication 1 lorsque le programme est exécuté par un processeur.

## Patentansprüche

1. Verfahren zur Konfiguration eines Monosegment-Pseudolinks, virtuelle Schaltung genannt, der zwischen einem ersten (PE1) und einem zweiten (PE2) Endgerät aufgebaut wird, über den ein Datenstrom übertragen werden soll, wobei die virtuelle Schaltung von einem darunterliegenden Pfad getragen wird, der eine erste Verbindung, die zwischen dem ersten Endgerät und einem Zwischengerät (R) aufgebaut wird, und eine zweite Verbindung, die zwischen dem Zwischengerät und dem zweiten Endgerät aufgebaut wird, und eine dritte Verbindung enthält, die zwischen dem Zwischengerät und einem dritten Endgerät (PE3) aufgebaut wird, wobei die virtuelle Schaltung durch eine Aufbaumitteilung (SIG4) aufgebaut wird, die einen Identifikationsparameter der virtuellen Schaltung (FEC1) sowie des darunterliegenden Pfads, der die virtuelle Schaltung trägt, und einen Kennsatz (lbl1) enthält, der vom ersten Gerät bestimmt und vom ersten Endgerät (PE1) jedem Paket hinzugefügt wird, das dazu bestimmt ist, zum zweiten Endgerät (PE2) gesendet zu werden, wobei das Verfahren **dadurch gekennzeichnet, dass** es die folgenden Schritte enthält, die im dritten Endgerät (PE3) ausgeführt werden:
- einen Schritt des Empfangs einer Konfigurationsmitteilung (SIG5), wobei die Mitteilung mindestens die folgenden Parameter enthält:
- einen Identifikationsparameter der virtuellen Schaltung,
- einen Identifikationsparameter des darunterliegenden Pfads, der die virtuelle Schaltung trägt,
- einen Kennsatz (lbl1), der vom ersten Endgerät (PE1) bestimmt wird,
- einen Schritt der Konfiguration einer Schalttabelle mittels der Parameter,
- einen Schritt der Verarbeitung des Datenstroms der Pakete, die dazu bestimmt sind, mit Hilfe der konfigurierten Tabelle zum zweiten Endgerät gesendet zu werden, wenn die virtuelle Schaltung vom Zwischengerät (R) nach der Erfassung einer Störung auf der zweiten Verbindung durch das Zwischengerät (R) von der zweiten zur dritten Verbindung umgeschaltet wird.

2. Konfigurationsverfahren nach Anspruch 1, wobei die Konfigurationsmitteilung ebenfalls eine Aufbauanforderung einer weiteren virtuellen Schaltung, virtuelle Notschaltung genannt, zwischen dem ersten und dem dritten Endgerät enthält, wobei die virtuelle Notschaltung dazu bestimmt ist, den ursprünglich über die virtuelle Schaltung übertragenen Datenstrom zu übertragen.

3. Endgerät (PE3), das dazu bestimmt ist, ein Ende eines Monosegment-Pseudolinks, virtuelle Schaltung genannt, zu formen, der zwischen einem ersten (PE1) und einem zweiten (PE2) Endgerät aufgebaut wird, über den ein Datenstrom übertragen werden soll, wobei die virtuelle Schaltung von einem darunterliegenden Pfad getragen wird, der eine erste Verbindung, die zwischen dem ersten Endgerät und einem Zwischengerät (R) aufgebaut wird, eine zweite Verbindung, die zwischen dem Zwischengerät und dem zweiten Endgerät aufgebaut wird, und eine dritte Verbindung enthält, die zwischen dem Zwischengerät (R) und dem Endgerät (PE3) aufgebaut wird, wobei die virtuelle Schaltung durch eine Aufbaumitteilung (SIG4) aufgebaut wird, die einen Identifikationsparameter der virtuellen Schaltung (FEC1) sowie des darunterliegenden Pfads, der die virtuelle Schaltung trägt, und einen Kennsatz (lbl1) enthält, der vom ersten Gerät bestimmt wird und dazu bestimmt ist, den Datenstrom zu identifizieren, der vom ersten Endgerät (PE1) jedem Paket hinzugefügt wird, das dazu bestimmt ist, zum zweiten Endgerät (PE2) gesendet zu werden, wobei das Endgerät (PE3) **dadurch gekennzeichnet ist, dass** es enthält:
- Einrichtungen zum Empfang einer Konfigurationsmitteilung (SIG5), die mindestens die folgenden Parameter enthält:
- einen Identifikationsparameter der virtuellen Schaltung,
- einen Identifikationsparameter des darunterliegenden Pfads, der die virtuelle Schaltung trägt,
- den Kennsatz (lbl1), der vom ersten Endgerät (PE1) bestimmt wird;
- Konfigurationseinrichtungen einer Schalttabelle mittels der Parameter,
- Verarbeitungseinrichtungen des Datenstroms der Pakete, die dazu bestimmt sind, mit Hilfe der konfigurierten Tabelle zum zweiten Endgerät gesendet zu werden, wenn die virtuelle Schaltung vom Zwischengerät (R) nach der Erfassung einer Störung auf der zweiten Verbindung durch das Zwischengerät (R) von der zweiten zur dritten Verbindung umgeschaltet wird.

4. Computerprogramm, **dadurch gekennzeichnet, dass** es Programmcodeanweisungen zur Durchführung der Schritte des Konfigurationsverfahrens nach Anspruch 1 enthält, wenn das Programm von einem Prozessor ausgeführt wird.

## Claims

1. Method of configuring a single-segment pseudo linkup, called a virtual circuit, established between a first (PE1) and a second (PE2) terminal device through which a data stream is intended to be transmitted, the virtual circuit being carried by a subjacent path comprising a first link established between the first terminal device and an intermediate device (R), and a second link established between the intermediate device and the second terminal device, and a third link established between the intermediate device and a third terminal device, (PE3) the virtual circuit being established by an establishment message (SIG4) comprising an identification parameter for the virtual circuit (FEC1) as well as for the subjacent path carrying the virtual circuit and a label (lbl1) determined by the first device and added by said first terminal device (PE1) to each packet intended to be sent to said second terminal device (PE2), the method being **characterized in that** it comprises the following steps implemented in the third terminal device:
(PE3)
- a step of receiving a configuration message, (SIG5) said message comprising at least the following parameters:
- an identification parameter for the virtual circuit,
- an identification parameter for the subjacent path carrying the virtual circuit,
- a label (lbl1) determined by said first terminal device (PE1),
- a step of configuring a switching table by means of said parameters,
- a step of processing the data stream of the packets intended to be sent to said second terminal device with the aid of the configured table, when the virtual circuit is toggled by said intermediate device (R) from the second to the third link following the detection by said intermediate device (R) of a failure on the second link.

2. Method of configuration according to Claim 1, in which the configuration message also comprises a request to establish another virtual circuit, termed the backup virtual circuit, between the first and the third terminal device, the backup virtual circuit being intended to transmit the data stream initially transmitted through the virtual circuit.

3. Terminal device (PE3) intended to form an end of a single-segment pseudo linkup, called a virtual circuit, established between a first (PE1) and a second (PE2) terminal device through which a data stream is intended to be transmitted, the virtual circuit being carried by a subjacent path comprising a first link established between the first terminal device and an intermediate device (R), a second link established between the intermediate device and the second terminal device, and a third link established between the intermediate device (R) and the third terminal device, (PE3) the virtual circuit being established by an establishment message (SIG4) comprising an identification parameter for the virtual circuit (FEC1) as well as for the subjacent path carrying the virtual circuit and a label (lbl1) determined by the first device and intended to identify the data stream added by said first terminal device (PE1) to each packet intended to be sent to said second terminal device (PE2), the terminal device (PE3) being **characterized in that** it comprises:
- means for receiving a configuration message (SIG5) comprising at least the following parameters:
- an identification parameter for the virtual circuit,
- an identification parameter for the subjacent path carrying the virtual circuit,
- the label (lbl1) determined by said first terminal device (PE1),
- means for configuring a switching table by means of said parameters,
- means for processing the data stream of the packets intended to be sent to said second terminal device with the aid of the configured table, when the virtual circuit is toggled by said intermediate device (R) from the second to the third link following the detection by said intermediate device (R) of a failure on the second link.

4. Computer program, **characterized in that** it comprises program code instructions for the implementation of the steps of the configuration method according to Claim 1 when the program is executed by a processor.
